# EUROPEAN PATENT SPECIFICATION

(11) **EP 1 690 698 B1**
(45) Date of publication and mention of the grant of the patent: **19.08.2015**
(21) Application number: 06250674.6
(22) Date of filing: 08.02.2006
(51) Int. Cl.: B42D 25/24, B42C 3/00, G06K 19/02, B42D 25/00

(54) **Flexible sheet assembly**
Flexible Folienanordnung
Ensemble de feuilles souples

(30) Priority: 15.02.2005 GB 0503138
(43) Date of publication of application: 16.08.2006
(73) Proprietor: De La Rue International Limited, Basingstoke, Hants RG22 4BS (GB)
(72) Inventor: Holland, Barry John, Andover Hants SP10 3XT (GB)
(74) Representative: Skone James, Robert Edmund

(56) References cited:
- EP-A- 1 380 442
- EP-A2- 1 245 407
- EP-A2- 1 516 749
- WO-A-2004/096571
- WO-A1-2006/008420
- DE-A1- 1 774 064
- DE-U1- 9 304 147
- GB-A- 2 103 473

## Description

### Field of the Invention

The present invention relates to a flexible sheet assembly for a booklet, for instance a passport, visa or passbook for a bank or building society, and to methods of making such flexible sheet assemblies and booklets.

### Background to the Invention

In an attempt to make security booklets such as passports, visas and bank or building society passbooks more secure, less susceptible to counterfeiting and able to hold a greater amount of information, such booklets can now contain sophisticated security devices, for instance integrated chip circuits (ICC). The inclusion of ICCs in security documents is discussed, for example, in US 6,111,506 and US 2003/0168514 A1, which describe the inclusion of ICCs in laminated sheet materials.

However, a problem with incorporating such security devices into security booklets is that the thickness of the laminated sheets containing the security devices is such that the booklet is prevented from shutting properly and, instead, gapes open.

Furthermore, security booklets can comprise a large number of pages, for example a passport or visa can contain up to 96 pages. The inclusion of such large numbers of pages can also prevent the booklet from shutting properly, such that the booklet gapes open.

A further example of a booklet such as a passport is described in EP-A-1516749 which forms part of the state of the art under Article 54(3) EPC. A further example of a passport is described in WO-A-2006/008420 which again only forms part of the state of the art under Article 54(3) EPC.

There have been various attempts in the art to address this problem of gape. For instance, EP-A-1008459 describes the manufacture of a security booklet comprising an ICC-containing laminated sheet, in which a separate retaining band is attached to the cover of the booklet and the laminated sheet is attached to the band, for instance by glueing or fusing the band and laminated sheet together. A series of perforations is formed in the band or in a separate strip placed on the opposite side of the laminated sheet to the band, and either the strip or the plate is provided with projections at intervals corresponding to the perforations. The projections pass through the perforations to achieve attachment of the laminated sheet to the band by fusing or glueing.

EP-A-1380442 attempts to improve the bending flexibility of a laminated sheet to be included in a security document such as a passport by removing outer layers of the laminate in its bending or spine region. This removal of outer layers of such laminated materials is conventionally known as "thinning".

Similarly, EP-A-1245407 describes thinning of the spine region of a laminated data sheet for a security document to achieve greater bending ability of the sheet.

However, the booklets known in the art still typically display a gape. Accordingly, there remains a need for a security booklet which may include a security device such as an ICC, and/or a large number of pages, but which will not gape open, once closed. In addition, it is a key objective of the present invention not only to provide such a booklet, but also to maintain the durability and anti-counterfeiting properties associated with security booklets known in the art.

### Summary of the Invention

According to a first aspect of the present invention, a method of making a flexible sheet assembly for a booklet comprises providing an inlay sheet, which comprises a spine region and two leaves (step 1); providing a cover sheet, which is foldable about a spine region and which, on folding, forms two leaves (step 2); forming at least one aperture in the spine region of the inlay sheet by removal of at least 75% of the area of spine region (step 3); and attaching respective leaves of the inlay sheet and cover sheet to each other (step 4).

A second aspect of the present invention provides a method of making a booklet, which comprises providing a flexible sheet assembly by a method as previously defined and attaching additional pages to the inlay sheet of the flexible sheet assembly.

A third aspect of the present invention provides a booklet comprising a cover sheet, which is foldable about a spine region and which, when folded, forms two leaves, a pair of inlay sheet sections attached to respective leaves of the cover sheet, wherein the inlay sheet sections are attached to the cover sheet such that less than or equal to 25% of the area of the spine region of the cover sheet is coterminous with (eg. overlaps with) the inlay sheet sections; and additional pages attached to the spine region.

We have realised that the reason known booklets of this kind still gape open is because the booklet covers do not expand significantly when folded to form a spine. As a result, the inlay sheet on the inside of the bend at the spine of the booklet is compressed when the booklet is closed and, because the materials used to make the sheets generally do not irreversibly compress, the inlay sheet and, therefore, the booklet will reopen.

A flexible sheet assembly when made according to the present invention, and when incorporated into a booklet such as a passport overcomes the afore-mentioned problems associated with security booklets known in the art. In particular, the presence of at least one aperture in the spine region of the inlay sheet, which is formed by removal of at least 75% of the area of the spine region, provides a flexible sheet assembly with greater flexibility than those provided by the prior art such that, when incorporated into a booklet, the booklet will not gape open but will remain shut once closed. In addition, the flexible sheet assemblies and brooklets incorporating those assemblies provided by the present invention retain the characteristics of high durability and anti-counterfeiting properties which are desirable to booklets in this field.

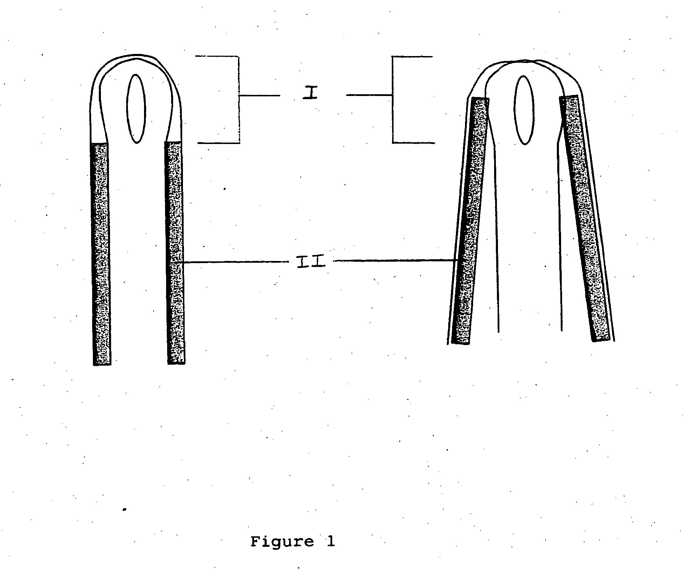

In the context of the present invention, the term "spine region" of the inlay sheet, cover sheet or booklet, for instance, is understood to refer to the region of the inlay sheet, cover sheet or booklet which holds the inner pages of the booklet in place. The inner pages may typically be held in place by a variety of conventional methods including stitching and adhesive bonding, as is described in more detail below. This definition of "spine region" may be further understood from consideration of Figure 1, which is a schematic aerial view of a booklet showing that the spine region (I) may be in the shape of the eye of a needle. The spine region may, of course, take other shapes in the finished booklet. Accordingly, Figure 1 shows that if, for instance, no inlay sheet (II) is present at the spine region, the booklet does not gape open whereas, in this particular instance, if some inlay sheet remains at the spine region, then the booklet will display gape.

Preferably, the at least one aperture in the spine region of the inlay sheet is formed via removal of at least 80% of the area of the spine region of the inlay sheet. More preferably, the one or more apertures are formed by removal of at least 90% of the area of the spine region. Most preferably, all of the spine region of the inlay sheet is removed.

Furthermore, if it is desired not to remove all of the spine region of the inlay sheet but, instead, to retain some inlay sheet material in its spine region, this may be achieved by the formation of one or more than one (ie. a plurality) of unconnected apertures in the spine region of the inlay sheet.

The one or more apertures may be of any shape. In a preferred embodiment, however, the at least one aperture formed in the spine region of the inlay sheet is in the form of a rectangle or slot typically having a width of 1-20 mm such that compression of the inlay sheet due to bending of the finished booklet will be prevented and, once closed, the booklet will not gape open. More preferably, the width of the slot(s) or rectangle(s) is 5-15 mm and, most preferably, 6-10 mm. In a particularly preferred embodiment, one such slot or rectangle running the entire length of the spine of the booklet is formed.

In order to reduce gape in the booklet even further, the inlay sheet may also be removed in the manner described above from areas of width of approximately 1 mm located on either side of the spine region of the inlay sheet. This allows a margin of error for inlay to folio registration during assembly of the booklet.

Inlay sheets suitable for use in the present invention are typically laminated sheet materials having 2-5 layers. Each layer typically has a thickness of around 25-200 µm and the overall thickness of the inlay sheet typically varies between 350-700 µm. The thickness of the layers and, therefore, the overall thickness of the inlay sheet is usually chosen to accommodate the thickness of the security device(s) typically incorporated therein, such as an ICC. Depending on the desired end product, the thickness of the device may substantially match that of the inlay sheet, however, in other circumstances the device may be allowed to protrude from the inlay sheet. In addition, one or more of the outer layers of the inlay sheet may be used to hermetically seal or "laminate" the device within the sheet. Such laminated inlay sheets are conventional in this field.

A wide variety of materials, again as are conventional in this field, are suitable for use in the manufacture of the inlay sheets. For instance, polymeric materials such as polyethylenes, polypropylenes, for instance Teslin, which is a highly filled microporous polyolefin-based film available from PPG, may be used. Other, similar, well-known films are also widely available and suitable for use in the manufacture of the inlay sheets. Layers comprising polycarbonate, polyethylene terephthalate (PET), polyethylene terephthalate glycol (PETG), polyester and nylon, optionally in the form of woven meshes, may also be used. Furthermore, the laminate layers in the inlay sheet, may be made from other standard materials such as paper and cotton or, indeed, mixtures of any of these types of material, for example mixtures of polyester and cotton. As is also well-known in this field, depending on the type of material chosen to form the laminate layers of the inlay sheet, it may be necessary to use an adhesive to bond the layers together as opposed to relying upon conventional heat fusion methods to effect lamination of the layers.

In addition, prior to step (3) of the above-described method, the inlay sheet may be thinned at its spine region. In other words, one or more of the outer layers of the laminated inlay sheet may be removed at its spine region, using conventional means known in this field. Furthermore, thinning of the inlay spine region may be effected over the entire area of the spine region, or over one or more portions thereof. Thinning of the spine region of the inlay is particularly desirable if not all of the spine region is to be removed during formation of the aperture(s) in step (3).

If an ICC is to be incorporated into the flexible sheet assembly made according to the present invention it is, again, of the sort conventionally used in this field and is preferably provided in an aperture in the inlay sheet. Once the ICC is present in the aperture, an antenna is positioned on the inlay sheet typically *via* ultrasonic, thermocompression, etching or printing methods conventionally known in the art, and is subsequently connected to the ICC, again *via* conventional methods such as thermocompression, ultrasonic, solder or crimping methods. The antenna is typically made from conventional materials such as copper wire or copper etch, copper wire being preferred due to its greater durability.

Cover sheets suitable for use in the present invention are, again, typically formed from materials conventionally used in this field. For instance, cover sheets comprising a variety of polymeric materials, fibrous and/or bonded materials made from natural fibres such as paper, cotton or other textile fabrics, including woven or mesh materials, or mixtures of such materials, may be used. Again, the choice of material used to provide the cover sheet is typically dependent upon the desired end-product.

A wide variety of security booklets or documents may be formed *via* incorporation of the flexible sheet assembly made according to the present invention therein. For instance, a booklet or personal identification document such as a passport, travel authorisation document or visa, bank or building society passbook or the like may be provided by the present invention.

The booklet according to the present invention may consist essentially of only a flexible sheet assembly as also provided by the present invention or may comprise additional pages attached to the flexible sheet assembly, as is typical in booklets such as passports and visas. Such additional pages are attached to the inlay sheet of the flexible sheet assembly by conventional means such as stitching, stapling or glueing. The additional pages can be attached to the inlay sheet either before or after the flexible sheet assembly is formed. Accordingly, methods for the manufacture of a booklet according to the present invention include firstly attaching the additional pages to the inlay sheet and then incorporating the resulting inlay sheet with attached additional pages into a flexible sheet assembly by a method described herein. Alternatively, a flexible sheet assembly may firstly be provided and additional pages then attached to the finished flexible sheet assembly. Furthermore, the additional pages may either be attached individually to the flexible sheet assembly, or may be attached in the form of a folio, ie. preformed bundle of pages, as is again conventional in this field. The booklets are typically manufactured in 1 to 3-up folio form, 2-up folio being the most common type.

Because the flexible sheet assemblies and booklets of the present invention find particular use in security applications, the security devices typically incorporated therein, for instance ICCs, preferably contain data relating to the bearer of the booklet. Types of data which may typically be held in an ICC include facial image, fingerprint, iris scan, biographical information, bank details, health details and other security information. Also for this reason, the inlay sheet and/or additional pages, in particular the .end page, may be provided with security features such as security printing, for instance providing data relating to the bearer of the booklet. Such security features may, again, be formed from any conventional materials such as UV luminescent print and additives, magnetic materials, IR-readable materials and features provided by laser inscription. Other security features which may also be incorporated either into the flexible sheet assembly or into the finished booklet according to the present invention are those conventionally known in the art, for instance security threads, foils and holograms.

Furthermore, the inlay sheet may be provided with an adhesive layer containing a fluorescent additive. A booklet made using such an inlay sheet has a fluorescent edge which is visible when exposed to UV light. Thus, a further, useful security feature may be incorporated into booklets according to the present invention in this way.

As is clear from the above discussion, the method of the invention preferably also comprises a step (5) of providing an ICC in an aperture in the inlay sheet. Steps (3) to (5) of the method may be performed in any order. Preferably, however, step (4) will be performed after step (3). Also, preferably step (5) is performed before step (4) .

Even more preferable, is a method according to the present invention in which an ICC is firstly provided in an aperture in the inlay sheet, an aperture is then formed in the spine region by removal of at least 75% of the area of the spine region, and the leaves of the resulting inlay sheet comprising the ICC are then attached to respective leaves of the cover sheet. In other words, step (5) is performed before step (3), and step (3) is performed before (4).

Preferably, in step (3) when all of the spine region of the inlay sheet is removed, two laterally offset connecting regions are formed. The connecting regions connect the corresponding leaves of the inlay sheet together, thus providing support to the leaves in the instance where all of the spine region of the inlay sheet is removed prior to attachment of the inlay sheet to the cover sheet. Clearly, in this embodiment of the present invention, if the booklets are being manufactured in 1-up format then only two connecting regions are typically required, whereas if more than one booklet is being manufactured at any one time, ie. a 2-up or 3-up format is being employed, then more than two, for instance three, four or more, connecting regions will preferably be formed in step (3).

As discussed above and if desired, however, additional connecting regions may also be provided within the spine region of the inlay sheet via the formation of a plurality of apertures in step (3) of the method of the invention. These connecting regions provide extra support to the inlay sheet. These additional connecting regions may then be removed before completion of the flexible sheet assembly or may remain in tact. This embodiment of the method according to the present invention improves the ease of manufacture of the flexible sheet assembly according to the present invention.

Formation of at least one aperture in the spine region of the inlay sheet by removal of at least 75% of the area of the spine region is preferably achieved by die-cutting, due to the precise and accurate nature of this procedure. This is particularly useful when the inlay sheet is already attached to the cover sheet. However, other cutting processes known in the art, for instance punching or laser techniques, may also be employed in the method according to the present invention. The aperture for the ICC in the inlay sheet may also be made by similar methods.

Typically, the inlay sheet employed will have a surface area greater than the area of the cover of the resulting booklet. The cover sheets employed in the method of the present invention may be of the exact size required to form the cover of the desired booklet, or may also be of a greater surface area.

In a preferred embodiment of the method of making a flexible sheet assembly according to the present invention, the inlay sheet and cover sheet used in the method have areas at least as great as the combined surface area of at least two booklets such that, during production, at least two flexible sheet assemblies may be produced side by side on the production line to speed up production. As is conventional in this field, the production lines for the manufacture of booklets according to the present invention are typically operated in 1-up, 2-up or 3-up format.

Attachment of the respective leaves of the inlay sheet and the cover sheet to each other may be achieved by any conventional process used in this field. For instance, the respective leaves of the inlay sheet and cover sheet may be stitched, stapled, fused or glued together.

Preferably, following attachment of the respective leaves of the inlay sheet and cover sheet to each other, any excess cover sheet and inlay sheet is removed such that a flexible sheet assembly will remain having a surface area corresponding to that of the desired booklet. Once any excess cover sheet and inlay sheet has been removed or trimmed away, again using conventional techniques, a pair of inlay sheet sections attached to respective leaves of the cover sheet will remain.

The present invention will now be described with reference to the accompanying drawings, in which:
Figure 1 is a schematic aerial view of a security booklet (as previously described);
Figures 2-7 illustrate the steps involved in providing a flexible sheet assembly according to an example of the present invention;
Figure 8 provides a summary specification for the layout of an inlay sheet to be used for a passport or visa; and
Figure 9 illustrates the three phases of passport production on a Kugler production line.

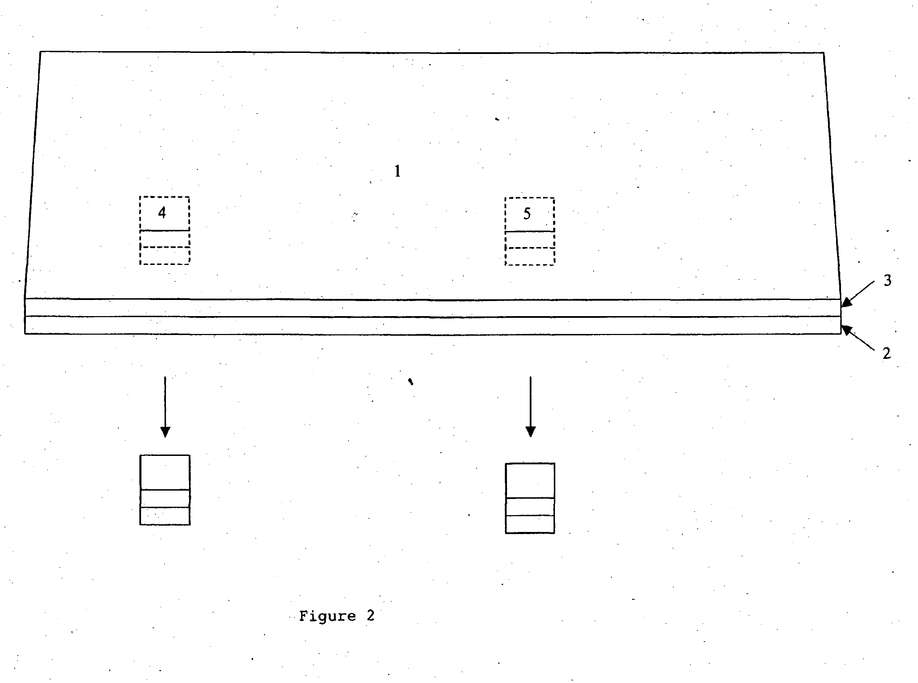

Figure 2 shows a substrate (1) consisting of two layers (2, 3). The format of the substrate layout is such that 2-up inlay sheets of dimension 274 x 188 mm, or similar, for use on a Kugler production line can be produced either singly or in multiples from one inlay sheet. Alternatively, a 1-up or 3-up inlay sheet may be produced. The Figures shown herein refer to a single 2-up inlay.

Layer (2) is a 100 µm thickness sheet of thermoplastic film, made from materials such as a polyolefin or polycarbonate or polyester, or a woven polyester sheet. A woven material is preferred due to its strength, flexibility, impact resistance and compatibility with water-based passport glues. Layer (3) is a 100 µm thickness thermoplastic sheet, chosen for its ability to fuse to layer (2).

Holes (4, 5) are then punched into the sheet, each to accept an ICC module.

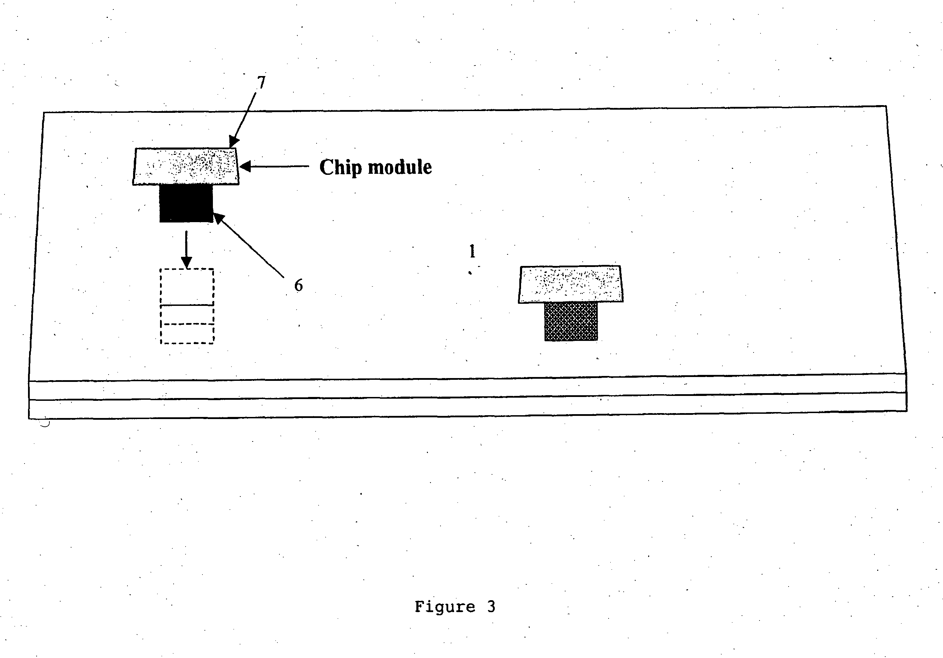

As shown in Figure 3, an ICC or chip (6) is placed into the hole, such that the chip (6) sits within the substrate or sheet (1) and the leadframe (7) of the ICC sits on the surface of the substrate (1).

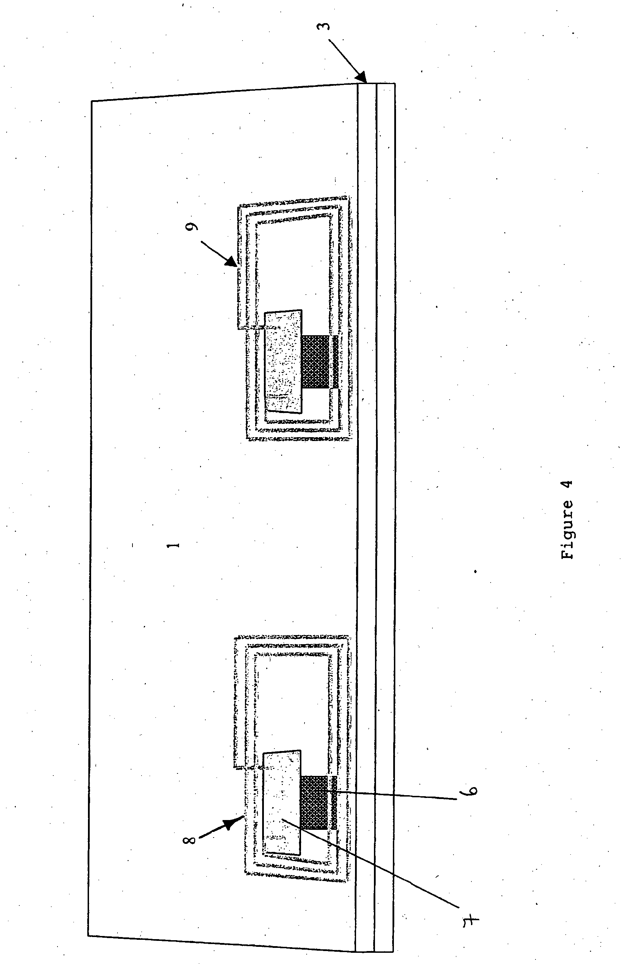

As shown in Figure 4, an antenna (8, 9) of copper wire type is deposited on to the sheet (1). The antenna is embedded into layer (3) using an ultrasonic or thermal technique, such that typically 80% of the copper is embedded in layer (3), while the ends of the antenna are trailed over the leadframe (7) of the ICC (6).

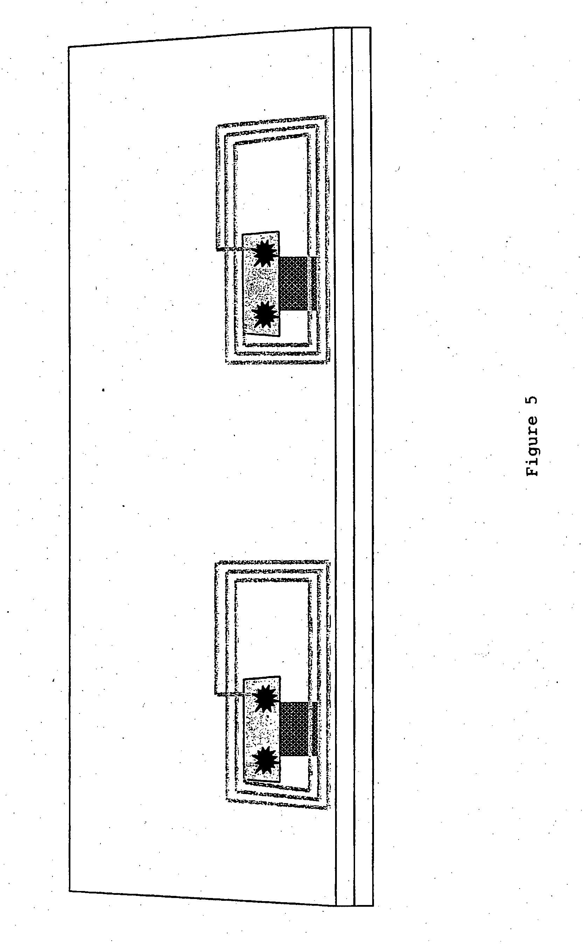

Figure 5 illustrates the subsequent interconnection of the ICC and antenna, by thermocompression, ultrasonic welding, soldering or mechanical crimping.

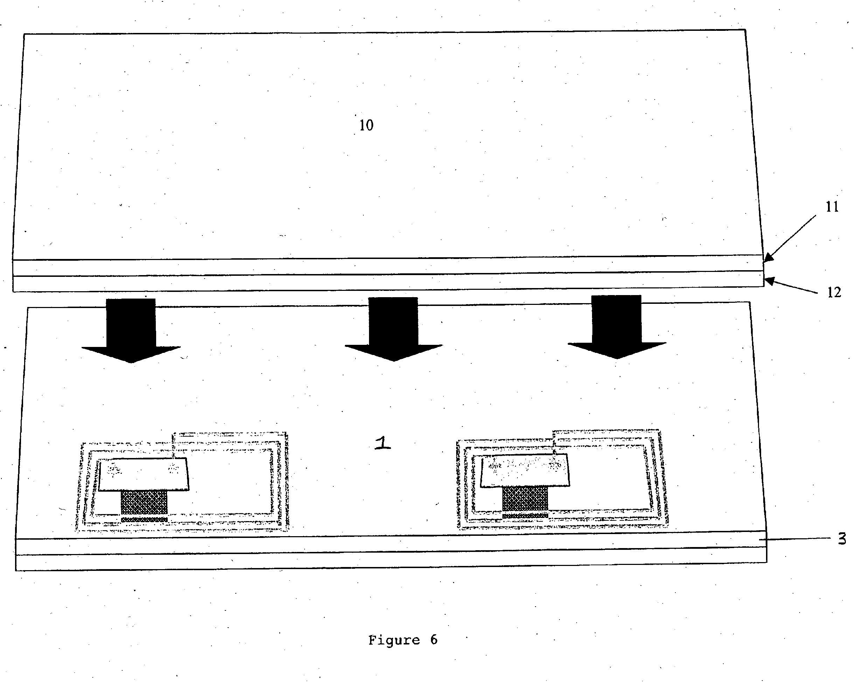

As shown in Figure 6, hot lamination of over layer (10) on to the substrate (1) then occurs to form the full inlay. Over layer (10) is formed by prelaminated layers (11, 12), layer 11 being the same as layer 2 and layer 12 being the same as layer 3. During hot lamination, layers (3, 12) are allowed to flow and adhere together thus reducing the protrusions caused by the electronic components.

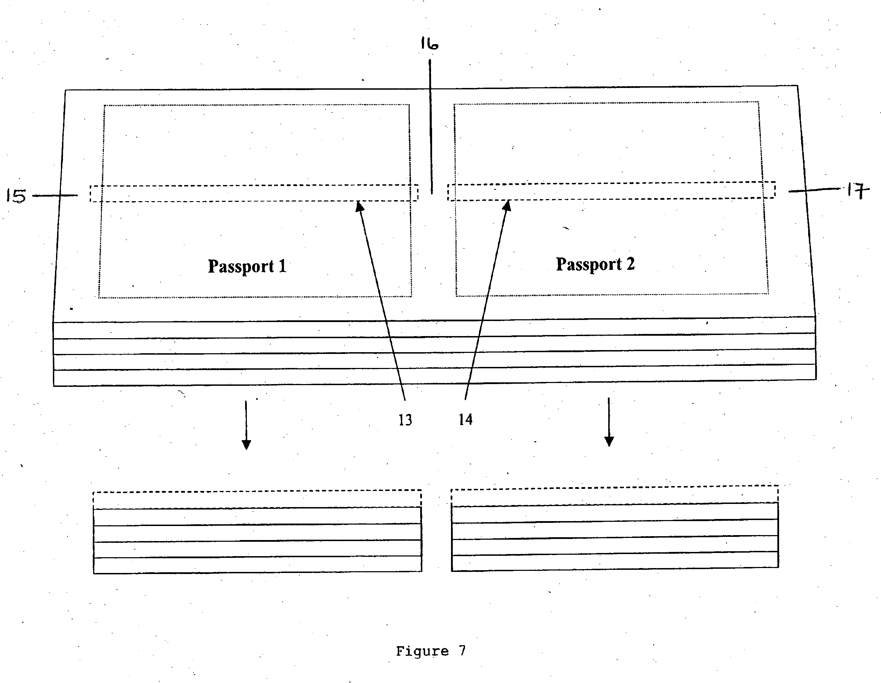

All of the spine regions (13, 14) of the inlay corresponding to where the two passports are to be formed are then die cut and removed as shown in Figure 7. This leaves uncut connecting regions (15, 16, 17). For passport production, the length of each slot (13, 14) should be 127 mm (allowing a tolerance of 2 mm on a 125 mm long passport). The width of each slot is, of course, dependent upon the thickness of the book to be produced, but will typically fall in the range of 1-20 mm.

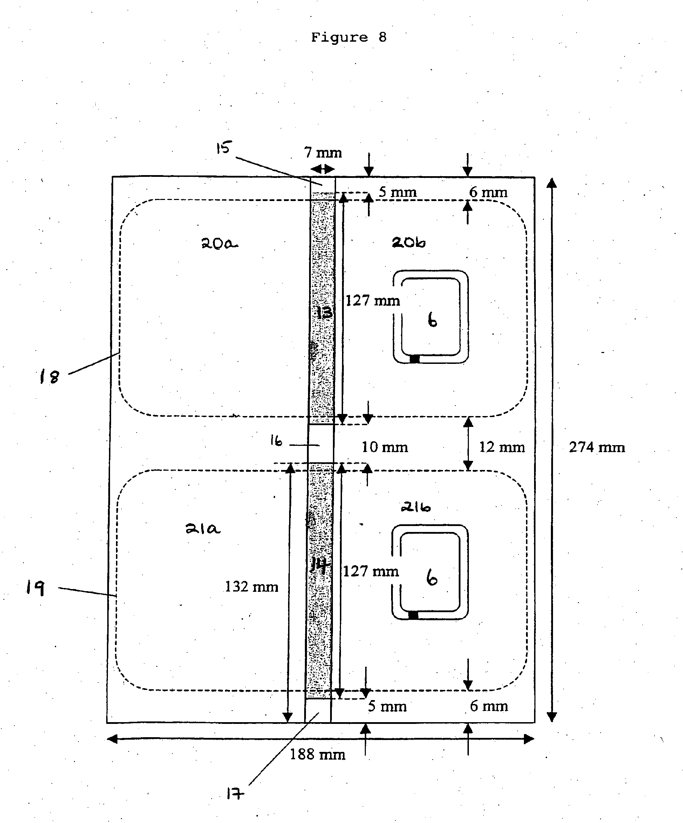

Figure 8 illustrates a summary specification for the layout of a typical 2-up inlay, showing the dimensions required for the production of passports. 7 mm width spine regions (13, 14) of the inlay are die cut to leave connecting regions (15, 16, 17) having widths 5 mm, 10 mm and 5 mm respectively. The position of chips (6) within the inlay is also illustrated in Figure 8. Trimming excess inlay sheet around outlines (18, 19) leaves two pairs (20a, 20b and 21a, 21b) of inlay sheet sections.

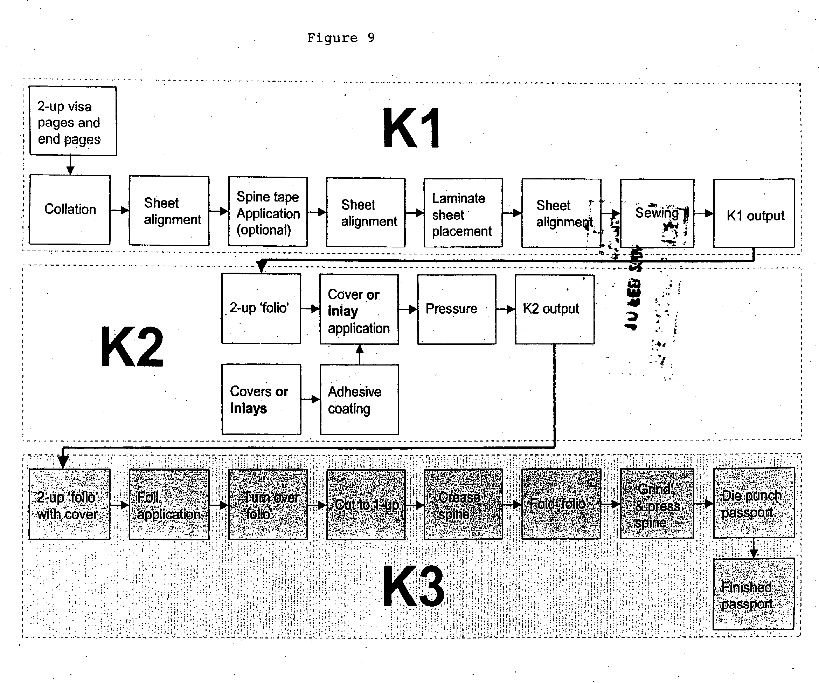

The die-cut inlay is incorporated into a passport on a Kugler line, as illustrated by Figure 9. The first step (K1) of the process involves the collation and stitching together of the inner pages and end paper of the passport or visa, optionally with the addition of spine tape, in 2-up folio format. Step 2 (K2) involves attaching an inlay and cover to the end paper of the folio produced in K1. As shown in Figure 9, this can be achieved in two ways. One option is to apply the inlay to the end paper of the folio, and then attach the combined inlay and folio to the cover sheet. Alternatively, the inlay can firstly be applied to the cover sheet, and the resulting inlay/cover sheet combination then applied directly to the end paper of the folio.

In the final step (K3), the passport is subjected to a finishing process. Firstly, the 2-up folio with cover undergoes a foil application, in which gold is hot-stamped on to the outside of the cover sheet at locations corresponding to the fronts of the two passports to be produced. Then the 2-up folio with cover is cut to provide two 1-up folios with covers. The spine of each 1-up folio is then creased, folded, and then ground and pressed to break down fibres in the spine, thus achieving better folding flexibility of the folio. Finally, each 1-up folio is die-punched to provide a finished passport.

## Claims

1. A method of making a flexible sheet assembly for a booklet, the method comprising
(1) providing an inlay sheet, which comprises two leaves and a spine region;
(2) providing a cover sheet, which is foldable about a spine region and which, on folding, forms two leaves;
(3) forming at least one aperture in the spine region of the inlay sheet by removal of at least 75% of the area of spine region (13, 14); and
(4) attaching respective leaves of the inlay sheet and cover sheet to each other.

2. A method according to claim 1, wherein in step (3) at least 80% of the area of the spine region of the inlay sheet is removed.

3. A method according to claim 2, wherein at least 90% of the area of spine region of the inlay sheet is removed.

4. A method according to any of claims 1 to 3, wherein in step (3) the at least 75% of the area of the spine region of the inlay sheet is removed to form one aperture.

5. A method according to any of claims 1 to 3, wherein the at least 75% of the area of the spine region of the inlay sheet is removed to form a plurality of unconnected apertures.

6. A method according to claim 3, wherein all of the inlay sheet is removed at its spine region.

7. A method according to claim 6, wherein in step (3) when all of the spine region of the inlay sheet is removed, two laterally offset connecting regions are formed which connect the two leaves of the inlay sheet together.

8. A method according to any preceding claim, wherein prior to step (3), the inlay sheet is thinned at its spine region.

9. A method according to any preceding claim, wherein in step (3) the spine region of the inlay sheet is removed by die-cutting.

10. A method according to any preceding claim, additionally comprising a step (5) of providing an integrated chip circuit (ICC) in an aperture in the inlay sheet.

11. A method according to claim 10, wherein steps (3), (4) and (5) are performed in any oder.

12. A method according to claim 11, when dependent on claim 7, wherein step (4) is performed after step (3).

13. A method according to claim 11 or claim 12, wherein step (5) is performed before step (4).

14. A method according to claim 11, wherein step (5) is performed before step (3), and step (3) is performed before step (4).

15. A method according to any preceding claim, wherein following attachment of the respective leaves of the inlay sheet and cover sheet to each other, any excess cover sheet and inlay sheet is removed.

16. A method according to any preceding claim, wherein the inlay sheet is provided with security printing, such as data relating to the bearer of the booklet.

17. A method according to any preceding claim when dependent on claim 10, wherein the ICC contains data relating to the bearer of the booklet.

18. A method of making a booklet, the method comprising making a flexible sheet assembly by a method as defined in any of claims 1 to 17 and attaching additional pages to the inlay sheet of the flexible sheet assembly.

19. A booklet comprising a cover sheet, which is foldable about a spine region and which, when folded, forms two leaves, a pair of inlay sheet sections attached to respective leaves of the cover sheet, wherein the inlay sheet sections are attached to the cover sheet such that less than or equal to 25% of the area of the spine region (13, 14) of the cover sheet is coterminous with the inlay sheet sections, and additional pages attached to the spine region.

20. A booklet according to claim 19, wherein no part of the inlay sheet sections are.provided at the spine region of the cover sheet.

21. A booklet according to claim 19 or claim 20, wherein an ICC is provided in an aperture of an inlay sheet section.

22. A booklet according to any of claims 19 to 21, wherein the inlay sheet is provided with security printing, such as data relating to the bearer of the booklet.

23. A booklet according to claim 21, or claim 22 when dependent on claim 21, wherein the ICC contains data relating to the bearer of the booklet.

24. A booklet according to any of claims 19 to 23, wherein the additional pages include an end page, which is provided with security printing, such as data relating to the bearer of the booklet.

25. A booklet according to any of claims 19 to 24 which is a passport, visa or bank or building society passbook.

## Patentansprüche

1. Verfahren zur Herstellung einer flexiblen Folienanordnung für ein Booklet, wobei das Verfahren umfasst:
(1) Bereitstellen einer Einlegefolie, die zwei Blätter und einen Rückenbereich umfasst;
(2) Bereitstellen eines Vorblattes, das um einen Rückenbereich herum faltbar ist und, das, bei Falten, zwei Blätter bildet;
(3) Bilden wenigstens einer Öffnung im Rückenbereich der Einlegefolie durch Entfernen von wenigstens 75% der Fläche des Rückenbereichs (13, 14) und
(4) Befestigen jeweiliger Blätter der Einlegefolie und des Deckblattes aneinander.

2. Verfahren nach Anspruch 1, wobei bei Schritt (3) wenigstens 80% der Fläche des Rückenbereichs der Einlegefolie entfernt wird.

3. Verfahren nach Anspruch 2, wobei wenigstens 90% der Fläche von Rückenbereich der Einlegefolie entfernt wird.

4. Verfahren nach irgendeinem der Ansprüche 1 bis 3, wobei bei Schritt (3) die wenigstens 75% der Fläche des Rückenbereichs der Einlegefolie entfernt wird, um eine Öffnung zu bilden.

5. Verfahren nach irgendeinem der Ansprüche 1 bis 3, wobei die wenigstens 75% der Fläche des Rückenbereichs der Einlegefolie entfernt wird, um eine Vielzahl nicht verbundener Öffnungen zu bilden.

6. Verfahren nach Anspruch 3, wobei alles der Einlegefolie an ihrem Rückenbereich entfernt wird.

7. Verfahren nach Anspruch 6, wobei bei Schritt (3), wenn alles vom Rückenbereich der Einlegefolie entfernt wird, zwei lateral versetzte verbindende Bereiche gebildet werden, welche die zwei Blätter der Einlegefolie miteinander verbinden.

8. Verfahren nach irgendeinem vorhergehenden Anspruch, wobei vor Schritt (3), die Einlegefolie in ihrem Rückenbereich dünner gemacht wird.

9. Verfahren nach irgendeinem vorhergehenden Anspruch, wobei bei Schritt (3) der Rückenbereich der Einlegefolie durch Stanzen entfernt wird.

10. Verfahren nach irgendeinem der vorhergehenden Ansprüche, das zusätzlich einen Schritt (5) der Bereitstellung eines integrierten Chip-Schaltkreises (ICC) in einer Öffnung in der Einlegefolie umfasst.

11. Verfahren nach Anspruch 10, wobei die Schritte (3), (4) und (5) in irgendeiner Reihenfolge ausgeführt werden.

12. Verfahren nach Anspruch 11, wenn von Anspruch 7 abhängig, wobei Schritt (4) nach Schritt (3) ausgeführt wird.

13. Verfahren nach Anspruch 11 oder Anspruch 12, wobei Schritt (5) vor Schritt (4) ausgeführt wird.

14. Verfahren nach Anspruch 11, wobei Schritt (5) vor Schritt (3) ausgeführt wird, und Schritt (3) vor Schritt (4) ausgeführt wird.

15. Verfahren nach irgendeinem vorhergehenden Anspruch, wobei, anschließend an das Befestigen der jeweiligen Blätter der Einlegefolie und des Deckblattes aneinander, jeglicher Überschuss des Deckblattes und der Einlegefolie entfernt wird.

16. Verfahren nach irgendeinem vorhergehenden Anspruch, wobei die Einlegefolie mit Sicherheitsdruck, wie beispielsweise Daten versehen ist, die sich auf den Besitzer des Booklets beziehen.

17. Verfahren nach irgendeinem vorhergehenden Anspruch, wenn von Anspruch 10 abhängig, wobei der ICC Daten enthält, die sich auf den Besitzer des Booklets beziehen.

18. Verfahren zur Herstellung eines Booklets, wobei das Verfahren das Herstellen einer flexiblen Folienanordnung durch ein Verfahren wie in irgendeinem der Ansprüche 1 bis 17 definiert und das Befestigen zusätzlicher Seiten an die Einlegefolie der flexiblen Folienanordnung umfasst.

19. Booklet das ein Deckblatt, welches um einen Rückenbereich faltbar ist und, welches, wenn gefaltet, zwei Blätter bildet, ein Paar Einlegefolienabschnitte, die an jeweiligen Blättern des Deckblattes befestigt sind, umfasst, wobei die Einlegefolienabschnitte derartig am Deckblatt befestigt sind, dass weniger als oder gleich 25% der Fläche des Rückenbereichs (13, 14) des Deckblattes an die Einlegefolienabschnitte, und zusätzliche Seiten angrenzt, die an den Rückenbereich befestigt sind.

20. Booklet nach Anspruch 19, wobei kein Teil der Einlegefolienabschnitte im Rückenbereich des Deckblattes bereitgestellt ist.

21. Booklet nach Anspruch 19 oder Anspruch 20, wobei der ICC in einer Öffnung eines Einlegefolienabschnitts bereitgestellt ist.

22. Verfahren nach irgendeinem der Ansprüche 19 bis 21, wobei die Einlegefolie mit Sicherheitsdruck, wie beispielsweise Daten versehen ist, die sich auf den Besitzer des Booklets beziehen.

23. Verfahren nach Anspruch 21 oder Anspruch 22, wenn von Anspruch 21 abhängig, wobei der ICC Daten enthält, die sich auf den Besitzer des Booklets beziehen.

24. Verfahren nach irgendeinem der Ansprüche 19 bis 23, wobei die zusätzlichen Seiten eine letzte Seite einschließen, die mit Sicherheitsdruck, wie beispielsweise Daten versehen ist, die sich auf den Besitzer des Booklets beziehen.

25. Booklet nach irgendeinem der Ansprüche 19 bis 24, das ein Reisepass, Visa- oder Bank- oder Baugenossenschafts-Passbook ist.

## Revendications

1. Procédé de réalisation d'un ensemble de feuilles souples pour constituer un livret, qui consiste
(1) à prévoir une feuille d'incrustation, comportant deux feuillets et un dos ;
(2) à prévoir une feuille de couverture, pliable autour d'un dos et qui, après pliage, forme deux feuillets;
(3) à former au moins une ouverture dans le dos de la feuille d'incrustation en ôtant au moins 75% de la surface du dos (13, 14); et
(4) à attacher les feuillets respectifs de la feuille d'incrustation et de la feuille de couverture les uns aux autres.

2. Procédé selon la revendication 1, **caractérisé en ce que**, lors de l'étape (3) décrite plus haut, au moins 80% de la surface du dos de la feuille d'incrustation sont ôtés.

3. Procédé selon la revendication 2, **caractérisé en ce qu'**au moins 90% de la surface du dos de la feuille d'incrustation sont ôtés.

4. Procédé selon l'une quelconque des revendications 1 à 3, **caractérisé en ce que**, lors de l'étape (3) décrite plus haut, la quantité minimum de 75% de la surface du dos de la feuille d'incrustation est ôtée pour former une ouverture.

5. Procédé selon l'une quelconque des revendications 1 à 3, **caractérisé en ce que** la quantité minimum de 75% de la surface du dos de la feuille d'incrustation est ôtée pour former une pluralité d'ouvertures non connectées.

6. Procédé selon la revendication 3, **caractérisé en ce que** la totalité de la feuille d'incrustation est ôtée au niveau de son dos.

7. Procédé selon la revendication 6, **caractérisé en ce que**, lors de l'étape (3) décrite plus haut, après que la totalité du dos de la feuille d'incrustation a été ôtée, deux zones connectées et latéralement décalées sont formées, et elles servent à connecter ensemble les deux feuillets de la feuille d'incrustation.

8. Procédé selon l'une quelconque des revendications précédentes, **caractérisé en ce que**, avant l'étape (3) décrite plus haut, la feuille d'incrustation est amincie au niveau de son dos.

9. Procédé selon l'une quelconque des revendications précédentes, **caractérisé en ce que**, lors de l'étape (3) décrite plus haut, le dos de la feuille d'incrustation est enlevé par poinçonnage.

10. Procédé selon l'une quelconque des revendications précédentes, comportant une étape supplémentaire (5) qui consiste à placer un circuit intégré à puce dans une ouverture de la feuille d'incrustation.

11. Procédé selon la revendication 10, **caractérisé en ce que** les étapes (3), (4) et (5) se déroulent dans n'importe quel ordre.

12. Procédé selon la revendication 11, lorsqu'elle dépend de la revendication 7, **caractérisé en ce que** l'étape (4) se déroule après l'étape (3).

13. Procédé selon la revendication 11 ou la revendication 12, **caractérisé en ce que** l'étape (5) se déroule avant l'étape (4).

14. Procédé selon la revendication 11, **caractérisé en ce que** l'étape (5) se déroule avant l'étape (3), **en ce que** l'étape (3) se déroule avant l'étape (4).

15. Procédé selon l'une quelconque des revendications précédentes, **caractérisé en ce que**, après avoir attaché les feuillets respectifs de la feuille d'incrustation et de la feuille de couverture les uns aux autres, toute partie excédentaire de la feuille de couverture et de la feuille d'incrustation est enlevée.

16. Procédé selon l'une quelconque des revendications précédentes, **caractérisé en ce que** la feuille d'incrustation porte des caractères imprimés de sécurité, comme par exemple des détails sur le détenteur du livret.

17. Procédé selon l'une quelconque des revendications précédentes, lorsqu'elle dépend de la revendication 10, **caractérisé en ce que** le circuit intégré à puce contient des détails sur le détenteur du livret.

18. Procédé de réalisation d'un livret, qui consiste à produire un ensemble de feuilles souples par une méthode définie selon l'une quelconque des revendications 1 à 17, et à attacher des pages supplémentaires à la feuille d'incrustation de l'ensemble de feuilles souples.

19. Livret comprenant une feuille de couverture, pliable autour d'un dos et qui, après pliage, forme deux feuillets, deux sections de feuille d'incrustation attachées à des feuillets respectifs de la feuille de couverture, **caractérisé en ce que** les sections de feuille d'incrustation sont attachées à la feuille de couverture de telle manière qu'une quantité inférieure ou égale à 25% de la surface du dos (13, 14) de la feuille de couverture recouvre partiellement les sections de feuille d'incrustation et les pages supplémentaires attachées au dos.

20. Livret selon la revendication 19, **caractérisé en ce qu'**aucune partie des sections de feuille d'incrustation n'est prévue au niveau du dos de la feuille de couverture.

21. Livret selon la revendication 19 ou la revendication 20, **caractérisé en ce qu'**un circuit intégré à puce est prévu dans une ouverture de section de feuille d'incrustation.

22. Livret selon l'une quelconque des revendications 19 à 21, **caractérisé en ce que** la feuille d'incrustation porte des caractères imprimés de sécurité, comme par exemple des détails sur le détenteur du livret.

23. Livret selon la revendication 21 ou la revendication 22 lorsqu'elle dépend de la revendication 21, **caractérisé en ce que** la feuille d'incrustation porte des caractères imprimés de sécurité, comme par exemple des détails sur le détenteur du livret.

24. Livret selon l'une quelconque des revendications 19 à 23, **caractérisé en ce que** les pages supplémentaires comprennent une dernière page qui porte des caractères imprimés de sécurité, comme par exemple des détails sur le détenteur du livret.

25. Livret selon l'une quelconque des revendications 19 à 24, qui est un passeport, un visa, ou bien un livret bancaire ou de société de crédit immobilier.
